# EUROPEAN PATENT SPECIFICATION

(11) **EP 2 977 624 B1**
(45) Date of publication and mention of the grant of the patent: **18.09.2019**
(21) Application number: 15177542.6
(22) Date of filing: 20.07.2015
(51) Int. Cl.: F16B 21/08, F16B 1/00

(54) **IDENTIFICATION SYSTEM WITH ELECTRONIC TAG FOR IDENTIFYING A ROLLING BEARING AND HUB BEARING UNIT EQUIPPED THEREWITH**
IDENTIFIKATIONSSYSTEM MIT ELEKTRONISCHEM ETIKETT ZUR IDENTIFIKATION EINES ODER EINER DAMIT AUSGESTATTETEN WÄLZLAGERS ODER NABENLAGEREINHEIT
SYSTÈME D'IDENTIFICATION AVEC ÉTIQUETTE ÉLECTRONIQUE POUR IDENTIFIER UN PALIER À ROULEMENT ET UNITÉ DE ROULEMENT DE MOYEU DONT ÉQUIPPÉ

(30) Priority: 22.07.2014 IT TO20140579
(43) Date of publication of application: 27.01.2016
(73) Proprietor: Aktiebolaget SKF, 415 50 Göteborg (SE)
(72) Inventor: MONTAGNONI, Raffaele, 10064 Pinerolo (IT); VALLE, Piero, 10126 Torino (IT)
(74) Representative: Tedeschini, Luca

(56) References cited:
- EP-A1- 0 971 135
- JP-A- 2006 048 469
- US-A1- 2008 175 654
- US-B1- 6 239 737

## Description

### Technical field of the invention

The present invention concerns an identification system including an electronic tag intended to identify a machine component, for example a bearing, and an assembly system for the electronic tag. Furthermore, the present invention refers to a hub bearing unit equipped with the assembly system and the relative electronic tag.

### Known art

As is known, in the industrial sector, there is a particular need to verify the authenticity of the components used, for example during the assembly of a machine. For said purpose, the use of electronic tags consisting of radio-frequency identification devices (RFID) is known.

In general, an RFID device, also known as RFID tag, is a device capable of storing data and transmitting the stored data to a reader, when interrogated by said reader; furthermore, the RFID devices are configured to communicate in wireless mode.

For example, the patent EP1615091 describes a machine component which comprises within it an RFID tag, which in turn comprises an integrated circuit (chip) and an antenna connected to the chip; the chip stores information relative to said component.

Another system for identifying a component of a machine is known from US 6,239,737 B1.

It is not always easy or possible to inexpensively position on the inside or outside of a machine component an RFID tag so that it is protected from impact and from other possible drawbacks that can occur during the machine assembly stages and so as to obtain optimal transmission of the radio-frequency signals. Even more so when the machine component in question is a rolling bearing and, more specifically, a hub bearing unit intended for use on a vehicle. Furthermore the RFID tag must not become accidentally detached from the bearing during normal use thereof, so that when the bearing or hub bearing unit is returned to the manufacturer, for example in the case of a suspected defect or at the end of its working life, it is possible, for example by reading a code stored in the RFID tag, to recover all the production parameters from a specific database, for example.

### Summary of the invention

The purpose of the present invention is to provide an identification system for identifying a machine component, for example a bearing or a hub bearing unit, including an electronic tag intended to identify the component, which protects and ensures optimal operation of the electronic tag both during the assembly stages of the component and during the entire working life of the component, which is during the entire working life of the component, which is reliable and easy and inexpensive to produce and use.

According to the invention, an identification system for identifying a machine component, in particular a bearing or a hub bearing unit, including an electronic tag, intended to identify the component, is therefore provided having the characteristics described in the attached claims.

A hub bearing unit as defined in claim 6 is also provided.

According to the invention, the identification system is based on an assembly system for assembling the electronic tag based on the use of a clip made of synthetic plastic material which incorporates the electronic tag and is snappingly assembled in a seat obtained for the purpose on the component, in particular through a flange of a ring of a bearing or hub bearing unit, allows quick assembly (and disassembly if necessary) of the electronic tag on/from the component, avoids all risks of detachment in use of the electronic tag from the component thanks to the particular shape of the seat and the clip, allows a certain distance to be maintained accurately and constantly between electronic tag and component on which it is assembled to optimise the performance thereof and represents a solution that is easy and inexpensive to produce and use.

The invention will now be described with reference to the accompanying drawings, which illustrate a non-limiting embodiment thereof, in which:
- figure 1 schematically illustrates a partially sectional view according to a plane parallel to a diametral plane of a rolling bearing, in this case defining a hub bearing unit, provided with an identification system with an electronic tag according to the invention;
- figure 2 illustrates an overhead plan view of an essential component of the system with electronic tag of figure 1;
- figures 3 and 4 illustrate respective sectional views according to plotting planes III-III and IV-IV of the system component with electronic tag of figure 2;
- figure 5 illustrates on an enlarged scale a perspective view of a detail of the hub bearing unit of figure 1 produced according to the invention and featuring a construction variation of the system with electronic tag of figure 1; and
- figure 6 illustrates an orthogonal view in elevation of the component of figures 2 and 3.

### Detailed disclosure

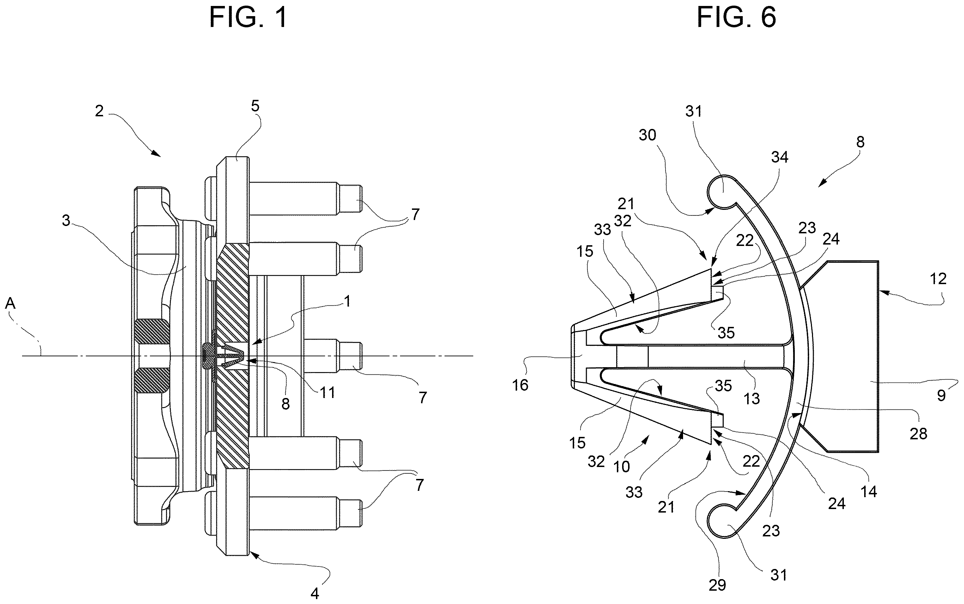

With reference to figures 1 to 6, the number 1 indicates as a whole an assembly system for assembling on a machine component, in particular on a bearing or hub bearing unit 2 of a vehicle, an electronic tag 20 of the RFID type, known per sé, intended to identify the component, in this case the rolling bearing 2.

In the example illustrated, the rolling bearing 2 constitutes a hub bearing unit of a vehicle, known overall, comprising an outer ring 3 and an inner ring 4 assembled relatively rotating about a common axis A of symmetry; the inner ring 4 comprises a radially external flange 5 which is the only part of the ring 4 visible in figure 1, the rest of the ring 4 being arranged inside the outer ring 3, also flanged. The flange 5 carries a series of pins or screws 7 for assembly thereon of a vehicle wheel, known and not illustrated for the sake of simplicity.

The assembly system for assembling the electronic tag 20 on the bearing 2 comprises, according to the invention, a clip 8 made in one single piece by moulding of a synthetic plastic material and comprising a head 9 and a shank 10; and a receiving seat 11 for snappingly receiving the shank 10 of the clip 8 designed to be obtained in one piece with the component to be identified, in this case with the rolling bearing 2. Where, according to the invention, the head 9 of the clip 8 has the electronic tag 20 incorporated therein by co-moulding, preferably arranged on the side of a first surface 12 of the head 9 of the clip 8, said first surface 12 is facing the side opposite to the shank 10, but not flush with the surface 12, so that the electronic tag 20 is slightly retracted within the head 9 with respect to the surface 12. The electronic tag 20 can be uncovered on the side of the surface 12, so as to be visible, or be completely embedded in the synthetic plastic material of the head 9.

In particular, according to a further characteristic of the invention, the receiving seat 11 is a through seat obtained through the component to be identified, in this case the rolling bearing or hub bearing unit 2.

A bearing or hub bearing unit 2 produced according to the invention is therefore characterised, with respect to a known rolling bearing of the same type, by the fact that it comprises an identification system consisting of an electronic tag 20 intended to identify the bearing, said electronic tag 20 being fixed integral with one first of the rings 3,4, in this case with the inner ring 4, by means of the assembly system 1, in which the receiving seat 11 is a through seat axially obtained through the flange 5 of the inner ring 4 and in which the head 9 of the clip 8 integrally carrying the electronic tag 20 is arranged axially protruding from the flange 5, on the side of the outer ring 3.

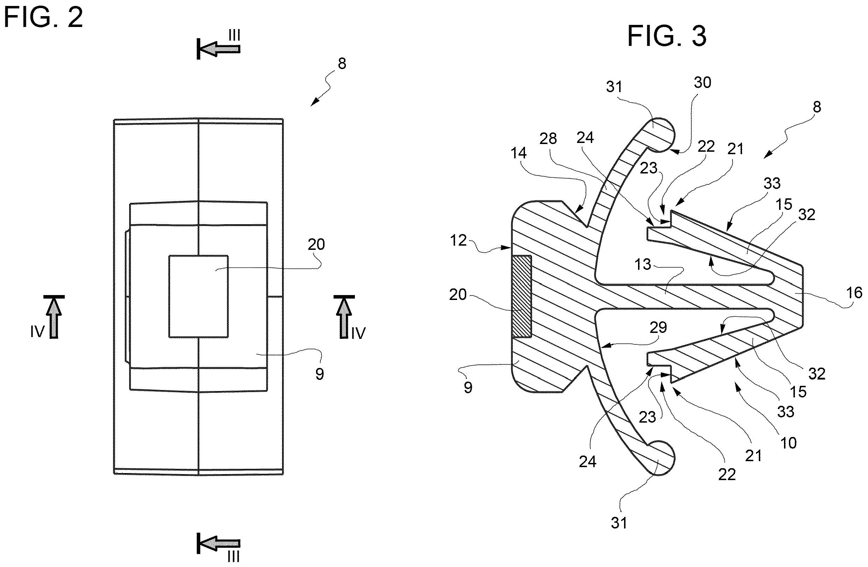

With particular reference to figures 2 to 4 and 6, the shank 10 of the clip 8 has the form of a ship's anchor and comprises a stem 13 which axially overhangingly protrudes from the head 9, parallel to the axis A and on the side of a second surface 14 of the head 9 opposite the first surface 12, and at least one pair of wings 15 which laterally overhangingly protrude from one free end 16 of the stem 13 opposite to the head 9.

The wings 15 are arranged obliquely to the stem 13, protruding from the free end 16 of the stem 13 rearwards, towards the head 9 of the clip 8, and are made so as to be elastically deformable.

In particular, the clip 8 of the example illustrated has only two opposite wings 15, configured so as to form between each other a V having the vertex substantially coinciding with the free end 16 of the stem 13; the wings 15 are adapted to bend at the free end 16 of the stem 13 and towards the stem 13, which in the example illustrated has a flat prismatic form.

Furthermore, in combination with the form of the shank 10 described above, the receiving seat 11 comprises (figure 6) a first through cavity 18 having transversal dimensions, measured transversally to the stem 13 of the shank 10 of the clip 8, and transversally to the axis A, smaller than the distance by which respective free ends 21 of the wings 15 overhangingly transversally protrude from the stem 13; in other words, the transversal dimensions of the cavity 18, measured transversally to the stem 13, are smaller than the distance between the free ends 21, again measured transversally to the stem 13, when the wings 15 are in non-deformed conditions.

The receiving seat 11 further comprises a second cavity 19, immediately adjacent to the first cavity 18, adapted to snappingly receive the wings 15 of the shank 10 of the clip 8; in fact, the cavity 19 has transversal dimensions, measured transversally to the stem 13, larger than the distance the respective free ends 21 of the wings 15 overhangingly transversally protrude from the stem; in other words, the transversal dimensions of the cavity 19, measured transversally to the stem 13, are greater than the distance between the free ends 21, again measured transversally to the stem 13, when the wings 15 are in non-deformed conditions.

According to a further and no less important aspect of the invention, the free ends 21 of the wings 15 are grapnel-shaped, being provided towards the head 9 of the clip 8 with respective indentations 22 which define on each wing 15 a first shoulder surface 23 facing the head 9 of the clip 8 and arranged, with the wings 15 in non-deformed conditions, substantially perpendicular to the stem 13 (figure 3) and a second shoulder surface 24, substantially perpendicular to the first shoulder surface 23 and facing the side opposite to the stem 13 (figure 3).

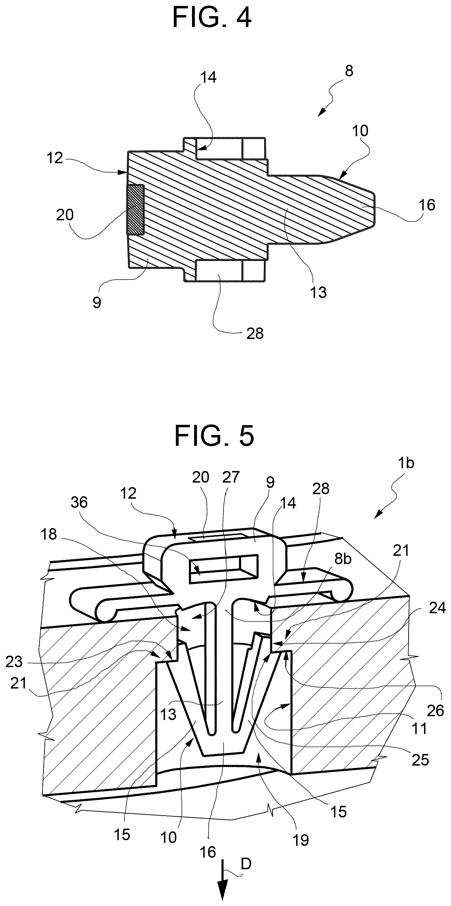

According to a further characteristic of the invention, furthermore, between the first cavity 18 and the second cavity 19 of the receiving seat 11, a right-angle edge 25 (figure 5) is defined for coupling with the indentation 22 of each wing 15 so that, with the shank 10 snappingly mounted in the receiving seat 11, the first shoulder surface 23 of the wings 15 cooperates against an annular shoulder surface 26 (figure 5) of the receiving seat 11 arranged between the first cavity 18 and the second cavity 19, while the second shoulder surface 24 of the wings 15 cooperates against a lateral wall 27 of the first cavity 18.

According to a further aspect of the invention, in combination with the above, the clip 8 also comprises an elastically deformable flange 28 arranged between the head 9 and the stem 13, at the second surface 14 of the head 9. The flange 28 is arranged transversally to the stem 13 and is arranged facing the wings 15, on the opposite side to the wings 15; the flange 28 also has transversal dimensions (always measured transversally to the stem 13) greater than the distance the wings 15 transversally overhangingly protrude from the stem 13, i.e. greater than the transversal distance between the free ends 21, so as to "cover" the wings 15 in a direction of introduction D of the shank 10 into the seat 11, indicated by an arrow in figure 5.

According to a further aspect of the invention, the elastically deformable flange 28 of the clip 8 is shaped so that, in non-deformed conditions, it has a concavity 29 (figures 3 and 6) facing the wings 15 and delimited towards the shank 10 by a peripheral outer edge 30 of the flange 28, said edge 30 being arranged substantially aligned flush with the first shoulder surface 23 of the wings 15.

In the preferred embodiment illustrated, the elastically deformed flange 28 of the clip 8 is shaped like a curved beam having concavity 29 facing the wings 15 of the shank 10 and terminating with opposite thickened lateral ends 31 having a cylindrical shape arranged facing the second shoulder surfaces 24 of the wings 15 and delimiting the edge 30.

The cavity 18 of the receiving seat 11, furthermore, has a length, measured parallel to the stem 13 of the shank 10 and, therefore, also parallel to the axis A, substantially equal to a distance between the first shoulder surfaces 23 of the wings 15 and the second surface 14 of the head 9 of the clip 8.

In this way (figure 5), when the clip 8 is snappingly inserted into the receiving seat 11, the concavity 29 substantially disappears and the flange 28 assumes a "flat" configuration.

In the non-limiting example illustrated, the stem 13 of the shank 10 has a prismatic form and carries only two elastically deformable opposite wings 15, which are delimited towards the stem 13 by respective substantially flat first faces 32 and, on the side opposite the stem 13, by second curved faces 33 delimited by conical surface stretches (figures 3 and 6); the indentation 22 of the free end 21 of each wing 15 provides on said wing 15, on the side of the head 9 of the clip 8, a flat front surface defining the first shoulder surface 23 and which is delimited by a curved edge 34 (figure 6) of the second face 33 of the wing 15, and a tooth 35 (figure 6) which delimits the second shoulder surface 24 and which extends from the flat front surface 23 and towards the head 9 of the clip 8 over a width, measured parallel to the stem 13 of the clip 8, smaller than a width of the wing 15 at the curved edge 34, as shown in figure 6.

With particular reference to figure 5, where the shape of the receiving seat 11 is well illustrated, in it the assembly system 1b is illustrated which differs from the system 1 described simply due to the fact that the clip 8 is replaced by a clip 8b; the details similar or identical to those already described are indicated for the sake of simplicity by the same reference numbers. In particular, the clip 8b differs from the clip 8 already described only due to the fact that the head 9 is through-crossed, transversally to the stem 13, by a perforation 36 obtained directly below the electronic tag 20.

Thanks to the structure described of the seat 11 and the clip 8, the electronic tag 20 can be easily installed and de-installed from the bearing 2 and remains arranged at a certain distance from the metallic mass defined by the flange 5, said distance being accurately defined thanks to the form of the wings 15.

Furthermore, due to the fact that the wings 15 cooperate with the receiving seat 11 by means of two shoulder surfaces 23 and 34 arranged at right angles and cooperating on opposite sides with the edge 25 and due to the fact that the flange 28, when it bends, with the shank 10 inserted in the receiving seat 11, "attracts" the surface 23 to abut against the annular shoulder surface 26 pushing it against it with a predefined force, the clip 8 runs no risk of accidentally abandoning the seat 11 even in the presence of impact or external stress.

In particular, due to the shape described of the shank 10, the surface of the flange 5, which is obtained directly by forging, does not require any machining since the high elasticity of the flange 28 of the clip 8 amply compensates for any variations in thickness of the flange 5 due to the obtaining thereof by simple forging, thus always ensuring a secure grip of the wings 15 in the receiving seat 11 due to the elastic counter-reaction effect exercised on the same by the bending of the flange 28.

All the objects of the invention are therefore achieved.

## Claims

1. A system for identifying a component (2) of a machine, in particular a bearing or hub bearing unit of a vehicle, comprising the component (2), an electronic tag (20) intended to identify the component, and an assembly system (1) for assembling the electronic tag; the assembly system including, in combination:
i- a clip (8) made in a single piece by moulding of a synthetic plastic material and comprising a head (9) and a shank (10); the head (9) of the clip having the electronic tag (20) incorporated therein, preferably on the side of a first surface (12) of the clip head, which first surface (12) is facing the side opposite to the shank; and
ii- a seat (11) for snappingly receiving the shank (10) of the clip (8) integrally obtained in the component (2); **characterized in that**:
iii- the receiving seat (11) being a through seat;
iv- the shank (10) of the clip (8) being anchor-shaped and comprising a stem (13) which overhangingly protrudes from the head (9), on the side of a second surface (14) of the head opposite to the first surface (12), and at least a couple of wings (15) which laterally overhangingly protrude from a free end (16) of the stem opposite to the head, the wings (15) being arranged obliquely to the stem (13), protruding from the free end (16) of the stem rearwards, towards the head (9) of the clip, and being elastically deformable so that they are adapted to bend at the free end (16) of the stem and towards the stem (13);
v- the receiving seat (11) comprising a first through cavity (18), having transversal dimensions, measured transversally to the stem (13) of the clip shank, smaller than the overhanging extension of respective free ends (21) of the wings which overhangingly transversally protrude from the stem (13); and a second cavity (19), immediately adjacent to the first, capable of snappingly receiving the wings (15) of the clip shank having transversal dimensions, measured transversally to the stem (13) of the clip shank, larger than the overhanging extension of the respective free ends (21) of the wings which overhangingly transversally protrude from the stem (13);
vi- the free ends (21) of the wings being grapnel-shaped, being provided with respective indentations (22) towards the head (9) of the clip, which define on each wing a first shoulder surface (23) facing the head (9) of the clip and arranged, with the wings (15) in undeformed conditions, substantially perpendicular to the stem (13), and a second shoulder surface (24), substantially perpendicular to the first shoulder surface (23) and facing the side opposite to the stem (13);
vii- between the first cavity (18) and the second cavity (19) of the receiving seat (1) a substantially right-angle edge (25) being defined for the coupling with the indentation (22) of each wing (15), so that the first shoulder surface (23) of the wings cooperates against an annular shoulder surface (26) of the receiving seat (11) arranged between the first cavity and the second cavity (18,19) and the second shoulder surface (24) of the wings (15) cooperates against a lateral wall (27) of the first cavity (18).

2. A system according to claim 1, **characterized in that** the clip (8) also comprises an elastically deformable flange (28) arranged between the head (9) and the stem (13), at the second surface of the head (14), and transversally to the stem (13), arranged facing the wings (15), on the opposite side to the wings and having transversal dimensions larger than the overhanging extension of the wings (15) which overhangingly transversally protrude from the stem (13).

3. A system according to claim 2, **characterized in that** the elastically deformable flange (28) of the clip (8) is shaped so as to have, in undeformed conditions, a concavity (29) facing the wings (15) of the shank and delimited towards the shank (10) by a peripheral outer edge (30) of the flange, which edge (30) is arranged substantially flush with the first shoulder surface (23) of the wings.

4. A system according to claim 2 or 3, **characterized in that** the elastically deformable flange (28) of the clip (8) is shaped as a curved beam having a concavity (29) facing the wings (15) of the shank and ending with opposite thickened ends (31) having a cylindrical shape and arranged facing the second shoulder surfaces (24) of the wings; the first cavity (18) of the receiving seat having a length, measured parallel to the stem (13) of the clip shank, substantially equal to a distance between the first shoulder surfaces (23) of the wings and the second surface (14) of the head (9) of the clip.

5. A system according to any one of the preceding claims, **characterized in that** the stem (13) of the shank of the clip (8) is prismatic in shape and carries two elastically deformable opposite wings (15) which are delimited towards the stem (13) by respective first faces (32) which are substantially flat, and on the side opposite to the stem by second curved faces (33) delimited by conical surface stretches; the indentation (22) of each wing (15) providing on the wing, on the side of the head (9) of the clip, a flat front surface (23) defining the first shoulder surface and delimited by a curved edge (34) of the second face (33) of the wing, and a tooth (35) which delimits the second shoulder surface (24) and which extends from the flat front surface (23) and towards the head (9) of the clip over a width, measured parallel to the stem (13) of the clip, smaller than a width of the wing (15) at the curved edge (25) of the second face of the wing.

6. A rolling bearing (2), in particular forming a hub bearing unit of a vehicle, comprising an outer ring (3) and an inner ring (4) assembled relatively rotating about a common symmetry axis (A), **characterized in that** it comprises an identification system according to any one of the preceding claims, the electronic tag (20) intended to identify the bearing, and the assembly system (1) by means of which the electronic tag is integrally fixed to a first one (4) of the rings wherein the receiving seat (11) is axially obtained through a flange (5) of the first ring (4) and wherein the head (9) of the clip integrally carrying the electronic tag (20) is arranged axially protruding from the flange (5) of the first ring, on the side of a second ring (3) of the bearing.

## Patentansprüche

1. System zur Identifikation eines Bauteils (2) einer Maschine, insbesondere eines Lagers oder einer Nabenlagereinheit eines Fahrzeugs, das Bauteil (2), ein elektronisches Etikett (20) zur Identifikation des Bauteils und ein Montagesystem (1) zur Montage des elektronischen Etiketts umfassend; wobei das Montagesystem in Kombination Folgendes aufweist:
i- einen Clip (8), der durch Formen eines synthetischen Kunststoffmaterials aus einem Stück gefertigt ist und einen Kopf (9) und einen Schaft (10) umfasst; wobei das elektronische Etikett (20) in den Kopf (9) des Clips integriert ist, vorzugsweise auf der Seite einer ersten Fläche (12) des Clipkopfes, wobei die erste Fläche (12) der dem Schaft entgegengesetzten Seite zugewandt ist; und
ii- einen Sitz (11) zur einrastenden Aufnahme des Schafts (10) des Clips (8), der im Bauteil (2) integriert ist; **dadurch gekennzeichnet, dass**:
iii- der aufnehmende Sitz (11) ein durchgehender Sitz ist;
iv- der Schaft (10) des Clips (8) ankerförmig ist und einen Stamm (13), der auf der Seite einer zweiten Fläche (14) des Kopfes der ersten Fläche (12) entgegengesetzt überhängend vom Kopf (9) vorsteht, und mindestens ein paar Flügel (15) umfasst, die von einem freien Ende (16) des Stamms dem Kopf entgegengesetzt seitlich überhängend vorstehen, wobei die Flügel (15) schräg zum Stamm (13) angeordnet sind und vom freien Ende (16) des Stamms in Richtung des Kopfes (9) des Clips nach hinten vorstehen und elastisch verformbar sind, sodass sie dazu eingerichtet sind, sich am freien Ende (16) des Stamms und in Richtung des Stamms (13) zu krümmen;
v- der aufnehmende Sitz (11) einen ersten durchgehenden Hohlraum (18) umfasst, der quer zum Stamm (13) des Clipschafts gemessene Querabmessungen aufweist, die kleiner sind als die überhängende Ausdehnung der jeweiligen freien Enden (21) der Flügel, die vom Stamm (13) überhängend quer vorstehen; und einen zweiten Hohlraum (19) umfasst, der direkt an den ersten angrenzt und in der Lage ist, die Flügel (15) des Clipschafts, die quer zum Stamm (13) des Clipschafts gemessene Querabmessungen aufweisen, die größer sind als die überhängende Ausdehnung der jeweiligen freien Enden (21) der Flügel, die vom Stamm (13) überhängend quer vorstehen, rastend aufzunehmen;
vi- die freien Enden (21) der Flügel enterhakenförmig sind und mit entsprechenden Vertiefungen (22) in Richtung des Kopfes (9) des Clips versehen sind, die auf jedem Flügel eine dem Kopf (9) des Clips zugewandte erste Schulterfläche (23) definieren und mit den Flügeln (15) im nicht verformten Zustand im Wesentlichen senkrecht zum Stamm (13) angeordnet sind, und eine zweite Schulterfläche (24), die im Wesentlichen senkrecht zur ersten Schulterfläche (23) verläuft und der dem Stamm (13) entgegengesetzten Seite zugewandt ist;
vii- zwischen dem ersten Hohlraum (18) und dem zweiten Hohlraum (19) des aufnehmenden Sitzes (1) eine im Wesentlichen rechtwinklige Kante (25) zur Kopplung mit der Vertiefung (22) jedes Flügels (15) definiert wird, sodass die erste Schulterfläche (23) der Flügel an einer ringförmigen Schulterfläche (26) des aufnehmenden Sitzes (11), die zwischen dem ersten Hohlraum und dem zweiten Hohlraum (18, 19) angeordnet ist, anschlägt und die zweite Schulterfläche (24) der Flügel (15) an einer seitlichen Wand (27) des ersten Hohlraums (18) anschlägt.

2. System nach Anspruch 1, **dadurch gekennzeichnet, dass** der Clip (8) außerdem einen elastisch verformbaren Flansch (28) umfasst, der zwischen dem Kopf (9) und dem Stamm (13) an der zweiten Fläche des Kopfes (14) und quer zum Stamm (13) angeordnet ist und den Flügeln (15) zugewandt auf der den Flügeln entgegengesetzten Seite angeordnet ist und Querabmessungen aufweist, die größer sind als die überhängende Ausdehnung der Flügel (15), die überhängend quer vom Stamm (13) vorstehen.

3. System nach Anspruch 2, **dadurch gekennzeichnet, dass** der elastisch verformbare Flansch (28) des Clips (8) so geformt ist, dass er im nicht verformten Zustand eine Konkavität (29) aufweist, die den Flügeln (15) des Schafts zugewandt ist und in Richtung des Schafts (10) durch eine umlaufende Außenkante (30) des Flanschs begrenzt wird, wobei die Kante (30) im Wesentlichen bündig mit der ersten Schulterfläche (23) der Flügel angeordnet ist.

4. System nach Anspruch 2 oder 3, **dadurch gekennzeichnet, dass** der elastisch verformbare Flansch (28) des Clips (8) als gekrümmter Träger geformt ist, der eine Konkavität (29) aufweist, die den Flügeln (15) des Schafts zugewandt ist und mit entgegengesetzten verdickten Enden (31) endet, die eine zylindrische Form aufweisen und den zweiten Schulterflächen (24) der Flügel zugewandt angeordnet sind; wobei der erste Hohlraum (18) des aufnehmenden Sitzes eine parallel zum Stamm (13) des Clipschafts gemessene Länge aufweist, die im Wesentlichen einem Abstand zwischen den ersten Schulterflächen (23) der Flügel und der zweiten Schulterfläche (14) des Kopfes (9) des Clips entspricht.

5. System nach einem der vorstehenden Ansprüche, **dadurch gekennzeichnet, dass** der Stamm (13) des Schafts des Clips (8) prismenförmig ist und zwei elastisch verformbare, entgegengesetzte Flügel (15) trägt die in Richtung des Stamms (13) durch entsprechende erste Flächen (32), die im Wesentlichen flach sind, und auf der dem Stamm entgegengesetzten Seite durch zweite gekrümmte Flächen (33), die durch konische Flächenabschnitte begrenzt werden, begrenzt werden; wobei die Vertiefung (22) jedes Flügels (15) auf dem Flügel auf der Seite des Kopfes (9) des Clips eine flache Stirnfläche (23), die die erste Schulterfläche definiert und durch eine gekrümmte Kante (34) der zweiten Fläche (33) des Flügels begrenzt wird, und einen Zahn (35), der die zweite Schulterfläche (24) begrenzt und sich von der flachen Stirnfläche (23) in Richtung des Kopfes (9) des Clips über eine parallel zum Stamm (13) des Clips gemessene Breite erstreckt, die kleiner als die Breite des Flügels (15) an der gekrümmten Kante (25) der zweiten Fläche des Flügels ist, bereitstellt.

6. Wälzlager (2), das insbesondere eine Nabenlagereinheit eines Fahrzeugs ausbildet, das einen Außenring (3) und einen Innenring (4) umfasst, die so montiert sind, dass sie sich relativ um eine gemeinsame Symmetrieachse (A) drehen, **dadurch gekennzeichnet, dass** es ein Identifikationssystem nach einem der vorstehenden Ansprüche, wobei das elektronische Etikett (20) dazu bestimmt ist, das Lager zu identifizieren, und das Montagesystem (1) umfasst, mittels dessen das elektronische Etikett integral an einem ersten (4) der Ringe befestigt wird, wobei der aufnehmende Sitz (11) axial durch einen Flansch (5) des ersten Rings (4) erhalten wird und wobei der Kopf (9) des Clips, der das elektronische Etikett (20) integral trägt, vom Flansch (5) des ersten Rings auf der Seite eines zweiten Rings (3) des Lagers axial vorstehend angeordnet ist.

## Revendications

1. Système d'identification d'un composant (2) d'une machine, en particulier d'un roulement ou d'une unité de roulement de moyeu d'un véhicule, comprenant le composant (2), une étiquette électronique (20) destinée à identifier le composant, et un système d'assemblage (1) pour assembler l'étiquette électronique ; le système d'assemblage comprenant, en combinaison :
i- une pince (8) réalisée d'une seule pièce par moulage d'une matière plastique synthétique et comprenant une tête (9) et une queue (10) ; la tête (9) de la pince ayant l'étiquette électronique (20) incorporée dans celle-ci, de préférence sur le côté d'une première surface (12) de la tête de la pince, laquelle première surface (12) fait face au côté opposé à la tige, et
ii- un siège (11) pour recevoir par encliquetage la queue (10) de la pince (8) obtenue intégralement dans le composant (2) ; **caractérisé en ce que** :
iii- le siège de réception (11) étant un siège traversant ;
iv- la queue (10) de la pince (8) étant en forme d'ancre et comprenant une tige (13) qui fait saillie en surplomb depuis la tête (9), sur le côté d'une seconde surface (14) de la tête opposée à la première surface (12), et au moins deux ailes (15) qui font saillie en surplomb latéralement d'une extrémité libre (16) de la tige opposée à la tête, les ailes (15) étant disposées obliquement par rapport à la tige (13), faisant saillie depuis l'extrémité libre (16) de la tige vers l'arrière, vers la tête (9) de la pince, et étant élastiquement déformables de sorte qu'elles sont adaptées pour se plier au niveau de l'extrémité libre (16) de la tige et vers la tige (13) ;
v- le siège de réception (11) comprenant une première cavité traversante (18), ayant des dimensions transversales, mesurées transversalement à la tige (13) de la queue de pince, plus petites que le prolongement en surplomb des extrémités libres respectives (21) des ailes qui font saillie transversalement en surplomb de la tige (13) ; et une seconde cavité (19), immédiatement adjacente à la première cavité, capable de recevoir par encliquetage les ailes (15) de la queue de pince, ayant des dimensions transversales, mesurées transversalement à la tige (13) de la queue de pince, plus grandes que le prolongement en surplomb des extrémités libres respectives (21) des ailes qui font saillie transversalement en surplomb de la tige (13) ;
vi- les extrémités libres (21) des ailes étant en forme de grappin, étant munies d'entailles respectives (22) vers la tête (9) de la pince, qui définissent sur chaque aile une première surface d'épaulement (23) faisant face à la tête (9) de la pince et disposées, avec les ailes (15) en conditions non déformées, sensiblement perpendiculaires à la tige (13), et une seconde surface d'épaulement (24), sensiblement perpendiculaire à la première surface d'épaulement (23) et faisant face au côté opposé à la tige (13) ;
vii- entre la première cavité (18) et la seconde cavité (19) du siège de réception (1), un bord sensiblement perpendiculaire (25) étant défini pour l'accouplement avec l'entaille (22) de chaque aile (15), de sorte que la première surface d'épaulement (23) des ailes coopère contre une surface d'épaulement annulaire (26) du siège de réception (11) disposée entre la première cavité et la seconde cavité (18, 19) et la seconde surface d'épaulement (24) des ailes (15) coopère contre une paroi latérale (27) de la première cavité (18).

2. Système selon la revendication 1, **caractérisé en ce que** la pince (8) comprend également une bride (28) élastiquement déformable disposée entre la tête (9) et la tige (13), au niveau de la seconde surface de la tête (14), et transversalement à la tige (13), disposée face aux ailes (15), du côté opposé aux ailes et ayant des dimensions transversales supérieures au prolongement en surplomb des ailes (15) qui font saillie en surplomb de manière transversale de la tige (13) .

3. Système selon la revendication 2, **caractérisé en ce que** la bride élastiquement déformable (28) de la pince (8) est formée de manière à avoir, en conditions non déformées, une concavité (29) faisant face aux ailes (15) de la queue et délimitée vers la queue (10) par un bord extérieur périphérique (30) de la bride, lequel bord (30) est agencé sensiblement pour être de niveau avec la première surface d'épaulement (23) des ailes.

4. Système selon la revendication 2 ou 3, **caractérisé en ce que** la bride élastiquement déformable (28) de la pince (8) a la forme d'une poutre courbe ayant une concavité (29) faisant face aux ailes (15) de la queue et se terminant par des extrémités (31) opposées épaissies ayant une forme cylindrique et disposées face aux secondes surfaces d'épaulement (24) des ailes ; la première cavité (18) du siège de réception ayant une longueur, mesurée parallèlement à la tige (13) de la queue de pince, sensiblement égale à une distance entre les premières surfaces d'épaulement (23) des ailes et la seconde surface (14) de la tête (9) de la pince.

5. Système selon l'une quelconque des revendications précédentes, **caractérisé en ce que** la tige (13) de la queue de la pince (8) est de forme prismatique et porte deux ailes opposées (15) élastiquement déformables qui sont délimitées vers la tige (13) par des premières faces respectives (32) qui sont sensiblement plates, et du côté opposé à la tige par des secondes faces incurvées (33) délimitées par des tronçons de surface coniques ; l'entaille (22) de chaque aile (15) prévoyant sur l'aile, sur le côté de la tête (9) de la pince, une surface frontale plate (23) définissant la première surface d'épaulement et délimitée par un bord incurvé (34) de la seconde face (33) de l'aile, et une dent (35) qui délimite la seconde surface d'épaulement (24) et qui s'étend depuis la surface frontale plate (23) et vers la tête (9) de la pince sur une largeur, mesurée parallèlement à la tige (13) de la pince, inférieure à une largeur de l'aile (15) au bord courbe (25) de la seconde face de l'aile.

6. Palier à roulement (2), notamment formant une unité de roulement de moyeu d'un véhicule, comprenant une bague extérieure (3) et une bague intérieure (4) assemblées tournant relativement autour d'un axe de symétrie commun (A), **caractérisé en ce qu'**il comprend un système d'identification selon l'une quelconque des revendications précédentes, l'étiquette électronique (20) destinée à identifier le roulement, et le système d'assemblage (1) au moyen duquel l'étiquette électronique est fixée d'un seul tenant à une première (4) des bagues, le siège de réception (11) étant obtenu axialement à travers une bride (5) de la première bague (4) et la tête (9) de la pince portant intégralement l'étiquette électronique (20) étant disposée en saillie axiale à partir de la bride (5) de la première bague, du côté d'une seconde bague (3) du roulement.
